# FASCICULE DE BREVET EUROPEEN

(11) **EP 3 960 042 B1**
(45) Date de publication et mention de la délivrance du brevet: **17.05.2023**
(21) Numéro de dépôt: 21191850.3
(22) Date de dépôt: 18.08.2021
(51) Int. Cl.: A47J 31/00, A47J 31/44, A47J 31/46

(54) **PROCÉDÉ DE RÉALISATION D'UN CAFÉ MOUSSÉ À PARTIR D'UNE MACHINE À CAFÉ AUTOMATIQUE MUNIE D'UN DISPOSITIF DE MOUSSAGE**
VERFAHREN ZUR HERSTELLUNG EINES AUFGESCHÄUMTEN KAFFEES AUS EINER AUTOMATISCHEN KAFFEEMASCHINE MIT EINER AUFSCHÄUMVORRICHTUNG
PROCESS FOR MAKING FROTHED COFFEE FROM AN AUTOMATIC COFFEE MACHINE EQUIPPED WITH A FROTHING DEVICE

(30) Priorité: 27.08.2020 FR 2008741
(43) Date de publication de la demande: 02.03.2022
(73) Titulaire: SEB S.A., 69130 Ecully (FR)
(72) Inventeur: HOFLEITNER, Céline, 74000 ANNECY (FR); MORIN, Gilles, 69290 POLLIONNAY (FR)
(74) Mandataire: SEB Développement

(56) Documents cités:
- DE-A1-102008 058 934
- DE-U1-202008 018 339
- US-A- 5 207 148
- US-B2- 9 182 169

## Description

La présente invention concerne un procédé de réalisation d'un café moussé, notamment d'un café froid moussé qui possède une mousse onctueuse, épaisse et qui tient dans le temps.

Il est connu de réaliser un café froid moussé sous le nom de « nitro coffee ». Le procédé de réalisation de cette boisson comporte une étape d'infusion de café à froid pour fabriquer un café appelé « cold brew » puis une étape de moussage du café avec de l'azote, notamment lors de la distribution du café.

Un tel procédé pour réaliser un tel café froid moussé permet d'obtenir une mousse onctueuse, épaisse et qui tient dans le temps. Cependant, un tel procédé est long pour réaliser le café moussé, notamment l'étape d'infusion à froid qui peut prendre plusieurs heures, et demande à l'utilisateur de nombreuses manipulations.

Il est également connu de réaliser des boissons moussées en utilisant une machine à café automatique comportant une tête de distribution comprenant une buse de sortie de café et un dispositif de moussage d'un liquide à faire mousser, notamment du lait. Le dispositif de moussage comprend un système d'aspiration du lait et d'air à venturi à partir d'un conduit d'amenée de vapeur. Un tel dispositif de moussage de lait est, par exemple, décrit dans le document EP2606782. Le dispositif de moussage comporte un conduit d'amenée du lait, un conduit d'amenée d'air et un conduit de sortie du liquide moussé. Cependant, de telles machines ne proposent que des recettes à base de café et de lait moussé. Un procédé de réalisation de café moussé est également connu d'un document US5207148A.

Le but de la présente invention est de remédier aux inconvénients précités et de proposer un procédé de réalisation d'un café moussé qui est simple et rapide à mettre en oeuvre pour obtenir un café moussé possédant une mousse onctueuse, épaisse et stable dans le temps.

Un autre but de la présente invention est de proposer un procédé de réalisation d'un café moussé mettant en oeuvre une machine à café à usage domestique dont la base technique est existante.

Ces buts sont atteints avec un procédé de réalisation d'un café moussé à partir d'une machine à café automatique comportant une tête de distribution comprenant au moins une buse de sortie de café et un dispositif de moussage d'un liquide à faire mousser muni d'un système d'aspiration du liquide à faire mousser et d'air à venturi relié à un conduit d'amenée de vapeur, le dispositif de moussage comportant un conduit d'amenée du liquide à faire mousser, un conduit d'amenée d'air et une buse de sortie de liquide moussé, la tête de distribution étant agencée au-dessus d'un repose tasse, le procédé comportant les étapes :
a) placer un récipient sur le repose tasse, sous la buse de sortie café et la buse de sortie de liquide moussé du dispositif de moussage,
b) réaliser au moins un café présentant une température T1 comprise entre 85°C et 95°C et un volume V1 inférieur à 220 ml,
le procédé étant caractérisé en ce qu'il comporte après l'étape a), une étape a1) consistant à :
a1) placer une extrémité libre du conduit d'amenée de liquide à faire mousser dans le récipient,
puis pendant et/ou après l'étape b), une étape b1) consistant à :
   b1) refroidir le café à une température inférieure à une température T2 avec un moyen externe et/ou interne à la machine à café automatique, la température T2 étant inférieure à 40°C,
   puis après l'étape b1), une étape b2) consistant à
   b2) alimenter le dispositif de moussage avec de la vapeur pendant un temps t1, le passage de la vapeur dans le venturi créant une aspiration de café et d'air pour réaliser du café moussé qui s'écoule dans le récipient par la buse de sortie de liquide moussé du dispositif de moussage.

Ainsi, un tel procédé de réalisation d'un café moussé est réalisé rapidement en quelques minutes, le procédé ne comportant que peu d'étapes réalisées manuellement, la majorité des étapes étant réalisées par une machine à café automatique à usage domestique qui est aujourd'hui devenue très courante.

Un tel procédé permet d'obtenir un café moussé, notamment un café froid moussé qui possède une mousse onctueuse, épaisse et qui tient dans le temps. Le procédé permet également d'apporter une saveur sucrée sans ajout de sucre ou d'édulcorant.

On comprend que la température T1 est gérée automatiquement par la machine à café automatique et que le volume V1 est programmé par l'utilisateur à l'aide d'un circuit de commande de la machine à café automatique.

Avantageusement, le temps t1 est compris entre 10s et 60s, de préférence compris entre 20s et 30s.

Le fait d'alimenter le dispositif de moussage avec du café froid permet de générer une mousse onctueuse et homogène, ceci en un temps très court. Le temps t1 est très court pour ne pas réchauffer trop la boisson avec la vapeur.

De préférence, le moyen mis en oeuvre à l'étape b1) est un moyen externe formé par un volume V2 de glaçons et en ce que le procédé comporte entre l'étape a) et l'étape b) une étape a2) consistant à :
a2) placer dans le récipient le volume V2 de glaçons.

L'étape a2) placer dans le récipient le volume V2 de glaçons peut être mise en oeuvre avant ou après l'étape a1) placer une extrémité libre du conduit d'amenée de liquide à faire mousser dans le récipient,
L'utilisation de glaçons comme moyen de refroidissement du café est un moyen extrêmement simple et extrêmement courant.

Avantageusement, le rapport entre le volume V2 de glaçons et le volume V1 de café est compris entre 0,5 et 2.

Un tel rapport permet de pas trop diluer le café. Pour réaliser une boisson plus corsée, on peut avantageusement réaliser à l'étape b), un enchainement de deux cafés espresso présentant un volume réduit, par exemple deux cafés espresso d'environ 20 ml ou plus.

De préférence, à l'étape b1), une temporisation décomptant un temps t2 est enclenchée au début de l'étape b) et lorsque le temps t2 est écoulé, l'étape b2) est engagée.

Une telle temporisation permet aux glaçons de fondre au contact du café chaud pour ainsi homogénéiser la température du mélange eau des glaçons/café.

Avantageusement, le temps t2 est compris entre 0s et 60 secondes.

Une telle durée de temporisation est courte et contribue à la rapidité de réalisation du café moussé.

De préférence, la machine à café automatique comporte un circuit de commande muni d'un organe de commande et en ce que le procédé comporte après les étapes a), a1) et a2), une étape a3) consistant à :
a3) appuyer sur l'organe de commande pour que le circuit de commande réalise automatiquement les étapes b), b1), b2).

Ainsi, la machine à café automatique réalise une grande partie du procédé en automatique.

Avantageusement, le moyen mis en oeuvre à l'étape b1) est un moyen interne formé par un dispositif de refroidissement, notamment d'un conduit de distribution du café et le procédé comporte entre l'étape a) et l'étape b) une étape a4) consistant à :
a4) activer le dispositif de refroidissement.

Une telle disposition permet de limiter au maximum les manipulations de l'utilisateur.

De préférence, la machine à café automatique comporte un circuit de commande muni d'un organe de commande et le procédé comporte après les étapes a) et a1), une étape a3') consistant à :
a3') appuyer sur l'organe de commande pour que le circuit de commande réalise automatiquement les étapes a4), b), b1), b2).

Ainsi, une fois que l'utilisateur a placé le récipient sous la tête de distribution et l'extrémité du conduit d'amenée de liquide à faire mousser dans le récipient, la machine à café automatique réalise le café en automatique.

Avantageusement, le dispositif de refroidissement est un dispositif de refroidissement à effet Pelletier comportant une partie froide en contact avec un conduit de distribution du café.

De préférence, le conduit d'amenée d'air présente une restriction de section comprise entre 0,02 et 0,06 mm², de préférence 0,03 mm².

Une telle disposition permet d'obtenir une mousse fine et stable.

De manière avantageuse, le conduit d'amenée d'air est raccordé au conduit d'aspiration du liquide à faire mousser pour former un mélange liquide à faire mousser/air qui sera ensuite aspirer par le venturi.

Avantageusement, le conduit d'aspiration du liquide à faire mousser comporte une restriction de section comprise entre 1 et 2 mm², de préférence entre 1,1 et 1,4 mm².

De manière avantageuse, du lait est ajouté dans la tasse, de préférence lors de l'étape a).

Cette disposition permet de réaliser une boisson à base de café et de lait, de type frappuccino.

L'invention sera mieux comprise à l'étude des modes de réalisation pris à titre nullement limitatif et illustrés dans les figures annexées dans lesquelles :
[Fig. 1] La figure 1 illustre une vue en perspective d'une machine à café automatique selon un mode particulier de réalisation de l'invention.
[Fig. 2] La figure 2 illustre une vue schématique de la machine à café automatique illustrée sur la figure 1.

On notera que, dans ce document, les termes «horizontal», «vertical», «inférieur», «supérieur», «longitudinal», «transversal», «haut», «bas», employés pour décrire la machine à café automatique font référence à cette machine reposant sur un plan de travail, en situation d'usage.

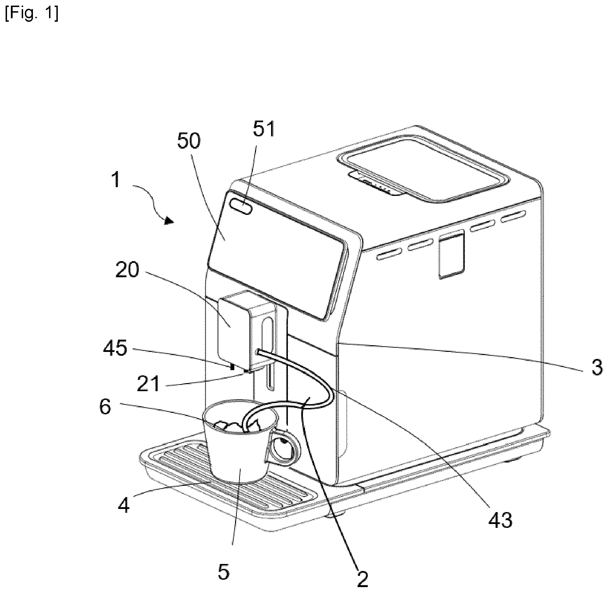

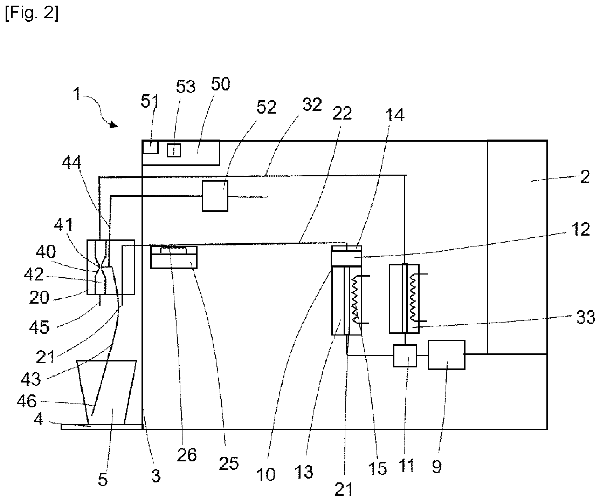

Dans l'exemple de réalisation représenté aux figures 1 à 2, le procédé de réalisation d'un café moussé est mis en oeuvre au moins partiellement dans une machine à café automatique 1. La machine à café automatique 1 comporte un réservoir 2 formant une alimentation en eau froide, une pompe 9 électrique (Fig. 2) et un dispositif d'infusion 10. Le dispositif d'infusion 10 est muni d'une chambre d'infusion 12 alimentée en mouture de café par un broyeur à grains (non représentés sur les figures). La machine à café automatique 1 comporte un bâti 3, un support de récipient 4 sur lequel un récipient 5 peut être disposé, et une tête de distribution 20 réglable en hauteur. La tête de distribution 20 comporte une buse de sortie de café 21. Le support de récipient 4 peut par exemple comporter une grille de support et un bac récolte gouttes (fig.1). La tête de distribution 20 est montée coulissante verticalement entre une positon haute dans laquelle l'utilisateur peut déposer une tasse de grande taille sur le repose tasse 4 et une position basse dans laquelle l'utilisateur peut déposer une tasse de petite taille sur le repose tasse 4. La machine à café automatique 1 comporte un circuit de commande 50 pour gérer la réalisation d'une boisson à partir des instructions données par un utilisateur. Le circuit de commande 40 comporte notamment un organe de commande 51 permettant à l'utilisateur de lancer la réalisation d'un café moussé. L'organe de commande 51 peut être formé notamment par une touche capacitive.

Tel que visible à la figures 2, la pompe 9 électrique alimente deux chaudières 13, 33 instantanées : une chaudière 13 pour produire de l'eau chaude et une chaudière 15 pour produire de la vapeur. La pompe 9 électrique comprend une entrée reliée au réservoir 2 qui est destiné à recevoir de l'eau froide. La pompe 9 électrique comporte une sortie reliée à une électrovanne 11 qui permet d'orienter l'eau vers la chaudière 13 pour produire de l'eau chaude ou vers la chaudière 33 pour produire de la vapeur. La chaudière 13 est agencée sous la chambre d'infusion 12 qui est munie d'une ouverture supérieure. La chambre d'infusion 12 est susceptible de recevoir un piston presseur 14 monté déplaçable selon un axe vertical au moyen d'un mécanisme d'entraînement (ce mécanisme n'est pas illustré sur les figures). La chaudière 13 est destinée à chauffer l'eau pour la préparation du café dans la chambre d'infusion 12.

La chaudière 13 contient une résistance électrique chauffante 15, un canal 16 de passage et de chauffage de l'eau dont une entrée est reliée, via la pompe 9 électrique au réservoir 2 d'eau froide et dont une extrémité débouche sur le fond de la chambre d'infusion 12. Lorsque le piston presseur 14 est dans une position basse de tassage telle que représenté à la figure 2, la chambre d'infusion 12 est reliée fluidiquement à la sortie de café 21 par un conduit de distribution 22. Un tel dispositif d'infusion 10 a, par exemple, été décrit plus en détail dans la demande de brevet PCTWO99/12456.

Conformément à la figure 2, la machine à café automatique 1 comporte un dispositif de moussage 40, notamment de lait agencé dans la tête de distribution 20. Le dispositif de moussage 40 comporte un système d'aspiration du liquide à faire mousser et d'air à venturi à partir d'une alimentation en vapeur issue de la chaudière 33. Le système d'aspiration à venturi est formé à partir d'une restriction de section 41 d'un conduit d'amenée de vapeur 32 qui débouche dans une chambre de moussage 42. Le passage du flux de vapeur crée une dépression au niveau de la restriction de section 41. Le dispositif de moussage 40 comporte un conduit d'amenée du liquide à faire mousser 43 et un conduit d'amenée d'air 44 qui sont connectés à la restriction de section 41 du conduit d'amenée de vapeur 32. Avantageusement, le conduit d'amenée du liquide à faire mousser 43 et le conduit d'amenée d'air 44 se rejoignent avant la restriction de section 41 du conduit d'amenée de vapeur 32 pour former un mélange liquide à faire mousser/air qui sera ensuite aspirer par le venturi. Le conduit d'amenée du liquide à faire mousser 43 est souple et comporte une extrémité libre 46. Un tel dispositif de moussage de lait est, par exemple, décrit dans le document EP2606782. Le conduit d'amenée d'air 44 peut avantageusement être ouvert ou fermé par un électrovanne 52. Le dispositif de moussage de lait 40 comporte une buse de sortie du liquide moussé 45 agencée à proximité de la buse de sortie de café 21. Le conduit d'amenée d'air 44 présente, avant d'être raccordé au conduit d'aspiration du liquide à faire mousser 43, une restriction de section égale à 0,03 mm². Le conduit d'aspiration du liquide à faire mousser 43 comporte avant d'être raccordé à la restriction de section 41 formant le venturi, une restriction de section comprise égale à 1,2 mm².

Dans une variante de réalisation illustrée à la figure 2, la machine à café automatique 1 comporte un dispositif de refroidissement 25 du conduit de distribution 22 du café. Le dispositif de refroidissement 25 est un dispositif à effet Pelletier comportant une partie froide 26 en contact avec le conduit de distribution du café.

Dans un premier mode de réalisation, le procédé de de réalisation d'un café moussé comporte les étapes :
a) placer un récipient 5 sur le repose tasse 4 de la machine à café automatique 1, sous la buse de sortie de café 21 et la buse de sortie du liquide moussé 45 du dispositif de moussage 40,
   a1) placer une extrémité libre 46 du conduit d'amenée du liquide à faire mousser 43 dans le récipient 5,
   a2) placer dans le récipient 5 un volume V2 de glaçons 6,
   a3) appuyer sur l'organe de commande 51 du circuit de commande 50,
b) réaliser un café présentant une température T1 comprise entre 85°C et 95°C et un volume V1 égal à 80 ml, le rapport entre le volume V2 de glaçons 6 et le volume V1 de café étant égal à 1,
   puis pendant l'étape b), une étape b1) consistant à :
   b1) refroidir le café pendant un temps t2 à une température inférieure à une température T2 avec les glaçons 6, la température T2 étant inférieure à 50°C, de préférence inférieure à 40°C, le temps t2 étant décompté par une temporisation 53 incorporée au circuit de commande 50 et enclenchée au début de l'étape b) et lorsque le temps t2 est écoulé, l'étape b2) est engagée, le temps t2 étant égal à 25 secondes.
   b2) alimenter le dispositif de moussage 40 avec de la vapeur pendant un temps t1, le passage de la vapeur dans la restriction de section 41 formant le venturi créant une aspiration de café et d'air pour réaliser du café moussé qui s'écoule dans le récipient 5 par la buse de sortie du liquide moussé 45 du dispositif de moussage 40. Le temps t1 est égal à 20 secondes.

Dans ce premier mode de réalisation, le circuit de commande 50 de la machine à café automatique 1 réalise automatiquement les étapes b), b1), b2).

Dans un deuxième mode de réalisation, la machine à café automatique 1 comporte un dispositif de refroidissement 25 et le procédé de réalisation d'un café moussé comporte les étapes :
a) placer un récipient 5 sur le repose tasse 4 de la machine à café automatique 1, sous la buse de sortie café 21 et la buse de sortie du liquide moussé 45 du dispositif de moussage 40,
   a1) placer une extrémité libre 46 du conduit d'amenée du liquide à faire mousser 43 dans le récipient 5,
   a3') appuyer sur l'organe de commande 51 du circuit de commande 50,
   a4) activer le dispositif de refroidissement 25.
b) réaliser au moins un café présentant une température T1 comprise entre 85°C et 95°C et un volume V1égal à XX ml,

Puis pendant l'étape b), une étape b1) consistant à :
b1) refroidir le café à une température inférieure à une température T2 avec le dispositif de refroidissement, la température T2 étant inférieure à 50°C, de préférence inférieure à 40°C,
b2) alimenter le dispositif de moussage 40 avec de la vapeur pendant un temps t1, le passage de la vapeur dans la restriction de section 41 formant le venturi créant une aspiration de café et d'air pour réaliser du café moussé qui s'écoule dans le récipient 5 par la buse de sortie du liquide moussé 45 du dispositif de moussage 40, le temps t1 étant égal à 20 secondes.

Dans ce deuxième mode de réalisation, le circuit de commande 50 de la machine à café automatique 1 réalise automatiquement les étapes a4), b), b1), b2).

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention tel que défini dans les revendications ci-dessous.

Dans une première variante de réalisation, le dispositif de moussage 40 est formé par une buse de moussage alimentée en vapeur et comportant un système d'aspiration à venturi. Une telle buse de moussage est décrite notamment dans le brevet EP0727168. A l'étape a1) du procédé, on place une extrémité libre de la buse de moussage dans le récipient.

Dans une deuxième variante de réalisation, le dispositif de refroidissement est un dispositif de refroidissement comportant un bloc froid en contact avec un conduit de distribution du café. Le bloc froid est amovible et contient un liquide eutectique. Le bloc froid est placé au préalable au congélateur puis remis dans la machine à café automatique 1 pour réaliser l'étape b1).

## Revendications

1. Procédé de réalisation d'un café moussé à partir d'une machine à café automatique (1) comportant une tête de distribution (20) comprenant au moins une buse de sortie de café (21) et un dispositif de moussage (40) d'un liquide à faire mousser muni d'un système d'aspiration à venturi du liquide à faire mousser et d'air, relié à un conduit d'amenée de vapeur (32), le dispositif de moussage (40) comportant un conduit d'amenée du liquide à faire mousser (43), un conduit d'amenée d'air (44) et une buse de sortie du liquide moussé (45), la tête de distribution (20) étant agencée au-dessus d'un repose tasse (4), le procédé comportant les étapes :
a) placer un récipient (5) sur le repose tasse (4), sous la buse de sortie de café (21) et la buse de sortie de liquide moussé (45) du dispositif de moussage (40),
b) réaliser au moins un café présentant une température T1 comprise entre 85°C et 95°C et un volume V1 inférieur à 220 ml,
le procédé étant **caractérisé en ce qu'**il comporte après l'étape a), une étape a1) consistant à :
a1) placer une extrémité libre (46) du conduit d'amenée du liquide à faire mousser (43) dans le récipient (5),
puis pendant et/ou après l'étape b), une étape b1) consistant à :
b1) refroidir le café à une température inférieure à une température T2 avec un moyen externe (6) et/ou interne (25) à la machine à café automatique (1), la température T2 étant inférieure à 40°C puis après l'étape b1), une étape b2) consistant à
b2) alimenter le dispositif de moussage (40) avec de la vapeur pendant un temps t1, le passage de la vapeur dans le venturi créant une aspiration de café et d'air pour réaliser du café moussé qui s'écoule dans le récipient (5) par la buse de sortie de liquide moussé (45) du dispositif de moussage (40).

2. Procédé de réalisation d'un café moussé selon la revendication 1, **caractérisé en ce que** le temps t1 est compris entre 10 et 60 secondes.

3. Procédé de réalisation d'un café moussé selon l'une quelconque des revendications 1 à 2, **caractérisé en ce que** le moyen mis en oeuvre à l'étape b1) est un moyen externe formé par un volume V2 de glaçons (6) et **en ce que** le procédé comporte entre l'étape a) et l'étape b) une étape a2) consistant à :
a2) placer dans le récipient (5) le volume V2 de glaçons (6).

4. Procédé de réalisation d'un café moussé selon la revendication 3, **caractérisé en ce que** le rapport entre le volume V2 de glaçons (6) et le volume V1 de café est compris entre 0,5 et 2.

5. Procédé de réalisation d'un café moussé selon l'une quelconque des revendications 3 à 4, **caractérisé en ce qu'**à l'étape b1), une temporisation (53) décomptant un temps t2 est enclenchée au début de l'étape b) et lorsque le temps t2 est écoulé, l'étape b2) est engagée

6. Procédé de réalisation d'un café moussé selon la revendication 5, **caractérisé en ce que** le temps t2 est compris entre 0 et 60 secondes.

7. Procédé de réalisation d'un café moussé selon l'une quelconque des revendications 3 à 6, **caractérisé en ce que** la machine à café automatique (1) comporte un circuit de commande (50) muni d'un organe de commande (51) et **en ce que** le procédé comporte après les étapes a), a1) et a2), une étape a3) consistant à :
a3) appuyer sur l'organe de commande (51) pour que le circuit de commande (50) réalise automatiquement les étapes b), b1), b2).

8. Procédé de réalisation d'un café moussé selon l'une quelconque des revendications 1 à 2, **caractérisé en ce que** le moyen mis en oeuvre à l'étape b1) est un moyen interne formé par un dispositif de refroidissement (25), notamment d'un conduit de distribution (22) du café et **en ce que** le procédé comporte entre l'étape a) et l'étape b) une étape a4) consistant à : a4) activer le dispositif de refroidissement (25).

9. Procédé de réalisation d'un café moussé selon la revendication 8, **caractérisé en ce que** la machine à café automatique (1) comporte un circuit de commande (50) muni d'un organe de commande (51) et **en ce que** le procédé comporte après les étapes a) et a1), une étape a3') consistant à :
a3') appuyer sur l'organe de commande (51) pour que le circuit de commande (50) réalise automatiquement les étapes a4), b), b1), b2).

10. Procédé de réalisation d'un café moussé selon l'une quelconque des revendications 8 à 9, **caractérisé en ce que** le dispositif de refroidissement est un dispositif de refroidissement (25) à effet Pelletier comportant une partie froide (26) en contact avec un conduit de distribution (22) du café.

11. Procédé de réalisation d'un café moussé selon l'une quelconque des revendications 1 à 10, **caractérisé en ce que** le conduit d'amenée d'air (44) présente une restriction de section comprise entre 0,02 et 0,06 mm², de préférence 0,03 mm².

12. Procédé de réalisation d'un café moussé selon l'une quelconque des revendications 1 à 11, **caractérisé en ce que** le conduit d'amenée du liquide à faire mousser (43) comporte une restriction de section comprise entre 1 et 2 mm², de préférence entre 1,1 et 1,4 mm².

13. Procédé de réalisation d'un café moussé selon l'une quelconque des revendications 1 à 12, **caractérisé en ce que** du lait est ajouté dans la tasse, de préférence lors de l'étape a).

## Patentansprüche

1. Verfahren zum Zubereiten eines geschäumten Kaffees ausgehend von einer automatischen Kaffeemaschine (1), umfassend einen Verteilungskopf (20), der mindestens eine Kaffeeausgangsdüse (21) umfasst, und eine Schäumungsvorrichtung (40) für eine zu schäumende Flüssigkeit, die mit einem Venturi-Ansaugsystem für die zu schäumende Flüssigkeit und für Luft ausgestattet ist, das mit einer Dampfzufuhrleitung (32) verbunden ist, wobei die Schäumungsvorrichtung (40) eine Zufuhrleitung für die zu schäumende Flüssigkeit (43), eine Luftzufuhrleitung (44) und eine Ausgangsdüse für die geschäumte Flüssigkeit (45) umfasst, wobei der Verteilungskopf (20) oberhalb einer Tassenablage (4) eingerichtet ist, wobei das Verfahren die folgenden Schritte umfasst:
a) Platzieren eines Behälters (5) auf der Tassenablage (4) unter der Kaffeeausgangsdüse (21) und der Ausgangsdüse für geschäumte Flüssigkeit (45) der Schäumungsvorrichtung (40),
b) Zubereiten mindestens eines Kaffees, der eine Temperatur T1 zwischen 85°C und 95°C und ein Volumen V1 geringer als 220 ml aufweist, wobei das Verfahren **dadurch gekennzeichnet ist, dass** es nach dem Schritt a) einen Schritt a1) umfasst, der aus Folgendem besteht:
a1) Platzieren eines freien Endes (46) der Zufuhrleitung für die zu schäumende Flüssigkeit (43) in dem Behälter (5),
dann während und/oder nach dem Schritt b) einen Schritt b1), der aus Folgendem besteht:
b1) Abkühlen des Kaffees auf eine Temperatur geringer als eine Temperatur T2 mit einem bezüglich der automatischen Kaffeemaschine (1) äußeren (6) und/oder inneren (25) Mittel, wobei die Temperatur T2 geringer als 40 °C ist, dann nach dem Schritt b1) einen Schritt b2), der aus Folgendem besteht
b2) Versorgen der Schäumungsvorrichtung (40) mit Dampf während einer Zeit t1, wobei der Dampfdurchgang in dem Venturi ein Ansaugen von Kaffee und von Luft erzeugt, um den geschäumten Kaffee zuzubereiten, der durch die Ausgangsdüse für geschäumte Flüssigkeit (45) der Schäumungsvorrichtung (40) in den Behälter (5) fließt.

2. Verfahren zum Zubereiten eines geschäumten Kaffees nach Anspruch 1,
**dadurch gekennzeichnet, dass** die Zeit t1 zwischen 10 und 60 Sekunden beträgt.

3. Verfahren zum Zubereiten eines geschäumten Kaffees nach einem der Ansprüche 1 bis 2, **dadurch gekennzeichnet, dass** das im Schritt b1) eingesetzte Mittel ein äußeres Mittel ist, das durch ein Volumen V2 an Eiswürfeln (6) gebildet wird, und dadurch, dass das Verfahren zwischen dem Schritt a) und dem Schritt b) einen Schritt a2) umfasst, der aus Folgendem besteht:
a2) Platzieren des Volumens V2 an Eiswürfeln (6) in dem Behälter (5).

4. Verfahren zum Zubereiten eines geschäumten Kaffees nach Anspruch 3, **dadurch gekennzeichnet, dass** das Verhältnis zwischen dem Volumen V2 an Eiswürfeln (6) und dem Volumen V1 an Kaffee zwischen 0,5 und 2 beträgt.

5. Verfahren zum Zubereiten eines geschäumten Kaffees nach einem der Ansprüche 3 bis 4, **dadurch gekennzeichnet, dass** im Schritt b1) eine Zeitabschaltung (53), die eine Zeit t2 zählt, zu Beginn des Schritts b) eingeschaltet wird, und wenn die Zeit t2 verstrichen ist, der Schritt b2 anknüpft.

6. Verfahren zum Zubereiten eines geschäumten Kaffees nach Anspruch 5, **dadurch gekennzeichnet, dass** die Zeit t2 zwischen 0 und 60 Sekunden beträgt.

7. Verfahren zum Zubereiten eines geschäumten Kaffees nach einem der Ansprüche 3 bis 6, **dadurch gekennzeichnet, dass** die automatische Kaffeemaschine (1) einen Steuerungsschaltkreis (50) umfasst, der mit einem Steuerungsorgan (51) ausgestattet ist, und dadurch, dass das Verfahren nach den Schritten a), a1) und a2) einen Schritt a3) umfasst, der aus Folgendem besteht:
a3) Betätigen des Steuerungsorgans (51), damit der Steuerungsschaltkreis (50) die Schritte b), b1), b2) automatisch ausführt.

8. Verfahren zum Zubereiten eines geschäumten Kaffees nach einem der Ansprüche 1 bis 2, **dadurch gekennzeichnet, dass** das im Schritt b1) eingesetzte Mittel ein inneres Mittel ist, das durch eine Abkühlungsvorrichtung (25) gebildet wird, insbesondere eine Verteilungsleitung (22) des Kaffees, und dadurch, dass das Verfahren zwischen dem Schritt a) und dem Schritt b) einen Schritt a4) umfasst, der aus Folgendem besteht: a4) Aktivieren der Abkühlungsvorrichtung (25).

9. Verfahren zum Zubereiten eines geschäumten Kaffees nach Anspruch 8, **dadurch gekennzeichnet, dass** die automatische Kaffeemaschine (1) einen Steuerungsschaltkreis (50) umfasst, der mit einem Steuerungsorgan (51) ausgestattet ist, und dadurch, dass das Verfahren nach den Schritten a) und a1) einen Schritt a3') umfasst, der aus Folgendem besteht:
a3') Betätigen des Steuerungsorgans (51), damit der Steuerungsschaltkreis (50) die Schritte a4), b), b1), b2) automatisch ausführt.

10. Verfahren zum Zubereiten eines geschäumten Kaffees nach einem der Ansprüche 8 bis 9, **dadurch gekennzeichnet, dass** die Abkühlungsvorrichtung eine Abkühlungsvorrichtung (25) mit Pelletier-Effekt ist, die einen kalten Teil (26) in Kontakt mit einer Verteilungsleitung (22) des Kaffees umfasst.

11. Verfahren zum Zubereiten eines geschäumten Kaffees nach einem der Ansprüche 1 bis 10, **dadurch gekennzeichnet, dass** die Luftzufuhrleitung (44) eine Abschnittsverengung zwischen 0,02 und 0,06 mm², vorzugsweise 0,03 mm² aufweist.

12. Verfahren zum Zubereiten eines geschäumten Kaffees nach einem der Ansprüche 1 bis 11, **dadurch gekennzeichnet, dass** die Zufuhrleitung für die zu schäumende Flüssigkeit (43) eine Abschnittsverengung zwischen 1 und 2 mm², vorzugsweise zwischen 1,1 und 1,4 mm² aufweist.

13. Verfahren zum Zubereiten eines geschäumten Kaffees nach einem der Ansprüche 1 bis 12, **dadurch gekennzeichnet, dass** in die Tasse Milch hinzugegeben wird, vorzugsweise während des Schrittes a).

## Claims

1. Method for making frothed coffee from an automatic coffee machine (1) comprising a dispensing head (20) comprising at least one coffee outlet nozzle (21) and a device (40) for frothing a liquid to be frothed equipped with a Venturi system for suctioning the liquid to be frothed and air, connected to a steam inlet conduit (32), the frothing device (40) comprising an inlet conduit for the liquid to be frothed (43), an air inlet conduit (44) and a frothed liquid outlet nozzle (45), the dispensing head (20) being arranged above a cup holder (4), the method comprising the steps:
a) placing a container (5) on the cup holder (4), under the coffee outlet nozzle (21) and the frothed liquid outlet nozzle (45) of the frothing device (40),
b) making at least one coffee having a temperature T1 of between 85°C and 95°C and a volume V1 less than 220ml, the method being **characterised in that** it comprises after step a), a step a1) consisting of:
a1) placing a free end (46) of the inlet conduit for the liquid to be frothed (43) in the container (5),
then during and/or after step b), a step b1) consisting of:
b1) cooling the coffee to a temperature less than a temperature T2 with an external (6) and/or internal (25) means to the automatic coffee machine (1), the temperature T2 being less than 40°C then after step b1), a step b2) consisting of
b2) providing the frothing device (40) with steam during a time t1, the passage of the steam into the Venturi creating a suctioning of coffee and air to make frothed coffee which flows into the container (5) through the frothed liquid outlet nozzle (45) of the frothing device (40).

2. Method for making a frothed coffee according to claim 1,
**characterised in that** the time t1 is between 10 and 60 seconds.

3. Method for making a frothed coffee according to any one of claims 1 to 2, **characterised in that** the means implemented in step b1) is an external means formed by a volume V2 of ice cubes (6) and **in that** the method comprises between step a) and step b), a step a2), consisting of:
a2) placing in the container (5) the volume V2 of ice cubes (6).

4. Method for making a frothed coffee according to claim 3, **characterised in that** the ratio between the volume V2 of ice cubes (6) and the volume V1 of coffee is between 0.5 and 2.

5. Method for making a frothed coffee according to any one of claims 3 to 4, **characterised in that** in step b1), a timeout (53) counting a time t2 is triggered at the start of step b) and when the time t2 has elapsed, step b2) is engaged.

6. Method for making a frothed coffee according to claim 5, **characterised in that** the time t2 is between 0 and 60 seconds.

7. Method for making a frothed coffee according to any one of claims 3 to 6, **characterised in that** the automatic coffee machine (1) comprises a control circuit (50) equipped with a control member (51) and **in that** the method comprises after steps a), a1) and a2), a step a3), consisting of:
a3) pressing on the control member (51) such that the control circuit (50) automatically carried out steps b), b1), b2).

8. Method for making a frothed coffee according to any one of claims 1 to 2, **characterised in that** the means implemented in step b1) is an internal means formed by a cooling device (25), in particular a conduit (22) for dispensing coffee, and **in that** the method comprises between step a) and step b), a step a4), consisting of: a4) activating the cooling device (25).

9. Method for making a frothed coffee according to claim 8, **characterised in that** the automatic coffee machine (1) comprises a control circuit (50) equipped with a control member (51) and **in that** the method comprises after steps a) and a1), a step a3'), consisting of:
a3') pressing on the control member (51) such that the control circuit (50) automatically carries out steps a4, b), b1), b2).

10. Method for making a frothed coffee according to any one of claims 8 to 9, **characterised in that** the cooling device is a Pelletier effect cooling device (25) comprising a cold part (26) in contact with a conduit (22) for dispensing coffee.

11. Method for making a frothed coffee according to any one of claims 1 to 10, **characterised in that** the air inlet conduit (44) has a section restriction of between 0.02 and 0.06mm², preferably 0.03mm².

12. Method for making a frothed coffee according to any one of claims 1 to 11, **characterised in that** the inlet conduit for the liquid to be frothed (43) comprises a section restriction of between 1 and 2mm², preferably between 1.1 and 1.4mm².

13. Method for making a frothed coffee according to any one of claims 1 to 12, **characterised in that** milk is added in the cup, preferably during step a).
